# EUROPEAN PATENT APPLICATION

(11) **EP 2 325 962 A1**
(43) Date of publication of application: **25.05.2011**
(21) Application number: 09176719.4
(22) Date of filing: 23.11.2009
(51) Int. Cl.: H02B 11/24

(54) **Partitioning device for MV cubicles.**

(71) Applicant: ABB Technology AG, 8050 Zürich (CH)
(72) Inventor: Magri, Matteo, I-24125, Bergamo (IT); Corti, Davide, I-24027, Nembro (BG) (IT)
(74) Representative: Giavarini, Francesco

(57) **Abstract**

A partitioning device (1) for Medium Voltage cubicles characterized in that it comprises at least a fixed partition wall (2) and at least a movable partition shutter (10), said partition shutter (10) being capable to be moved between a first, closed, position and a second, open, position, said partition device (1) further comprising an actuating device (4,5,6) operatively connected to said partition shutter (10) and capable to be operatively interfaced to a Medium Voltage circuit breaker and further capable to be actuated by a movement of said Medium Voltage circuit breaker during an insertion/extraction operation of said circuit breaker.

## Description

The present invention relates to a partitioning device for medium voltage applications. The partitioning device of the invention finds a convenient application in medium voltage cubicles, particularly in medium voltage cubicles in which the circuit breaker is in the so-called withdrawable configuration, i.e. it is movable between a connected position and a non-connected (earthed or disconnected) position. Medium voltage cubicles including a partitioning device of the kind disclosed herein are also part of the present invention. For the purposes of the present application the term Medium Voltage is referred to applications in the range of between 1 and 52 kV.

Medium voltage cabinets are well known in the art. They usually consist of a casing that is internally divided into a circuit breaker compartment, a bus-bar compartment, a feeder/cable compartment, and a control cabinet. A metal segregation between the compartments is usually foreseen.

A circuit breaker is normally positioned inside the circuit breaker compartment and, depending on the application, it can have either a fixed configuration or a withdrawable configuration. In the former, the circuit breaker has a fixed operating position once installed; in the latter the circuit breaker is movable at least between a service position, in which it is connected to the bus-bar and cable systems, and a test/disconnected position in which it is isolated from the bus-bar and cable systems. An intermediate, earthed position, is also foreseen, in which position the circuit breaker is connected to ground. To this end, the circuit breaker is provided, for each phase, with a couple of contacts that can be engaged/disengaged from corresponding stationary contacts positioned in the bus-bar and feeder/cable compartments and facing the circuit breaker compartment.

A segregation (physical and electrical) between the various compartment may be necessary depending on the application requirements. Indeed, when no segregation between the compartments is present, it is necessary to put out of service the whole switchgear for opening the cabinet or for having access to any switchgear components. In order to avoid such discontinuity of service, and to keep at least some of the compartments energized, a physical and electrical segregation between the compartments is achieved by using plastic and/or metallic partitioning systems.

In case of withdrawable configuration of the circuit breaker, such partitioning system normally foresee the use of movable partitioning walls so as to allow the movement of the circuit breaker terminals between the compartments.

Currently, the movement of the movable partitioning walls is actuated through a complex kinematic chain with levers and pins which links the movable partitioning walls to the switch truck. This solution, even if it allows to obtain a satisfactory partitioning between the compartments, has a number of disadvantages.

The transmission of the movement to the movable partitioning walls through a kinematic chain, permanently linking the movable partitioning walls to the switch trunk, involves the construction and assembly of a large number of parts. The kinematic chain itself is very complex, combining rotational and translational movements, with the possibility of failures of the movement. As a consequence of the incorrect functionality, an electrical arc may occur.

As a consequence, the required times for assembly and adjusting the various parts of the movable partitioning walls and kinematic chain are very high.

Also, the known solution allows only positive movement of the movable partitioning walls during insert operation.

It is therefore an object of the present invention to provide a partitioning system in which the above-mentioned drawbacks are avoided or at least reduced.

More in particular, it is an object of the present invention to provide a partitioning system for medium voltage applications of reduced complexity.

As a further object, the present invention is aimed at providing partitioning system for medium voltage applications having a reduced number of mechanical parts.

A further object of the present invention is to provide a partitioning system for medium voltage applications with reduction of time to assembly.

Still a further object of the present invention is to provide a partitioning system that makes it possible to avoid the use of a kinematic chain, with consequent reduction of risk of failure.

Another object of the present invention is to provide a partitioning system with improved functionality.

Yet another object of the present invention is to provide a partitioning system with positive and negative movement of the movable partitioning walls.

Still another object of the present invention is to provide a partitioning system for medium voltage application, as well as a medium voltage cabinet, with reduced manufacturing, installation and maintenance costs.

Thus, the present invention relates to a partitioning device for Medium Voltage cubicles characterized in that it comprises at least a fixed partition wall and at least a movable partition shutter, said partition shutter being capable to be moved between a first, closed, position and a second, open, position, said partitioning device further comprising an actuating device operatively connected to said partition shutter and capable to be operatively interfaced to a Medium Voltage circuit breaker and further capable to be actuated by a movement of said Medium Voltage circuit breaker during an insertion/extraction operation of said circuit breaker.

In this way, it is possible to overcome some of the disadvantages and drawbacks of the partitioning devices of the known art. As better explained hereinafter, there is no kinematic chain linking the movable partition shutter to the circuit breaker or a part thereof. The movement of movable partition shutter is obtained directly from the circuit breaker, or a part thereof (e.g. the bushing) during the insertion and extraction operations. The number of components is therefore greatly reduced, with consequent reduction of costs and time of manufacturing, installation and maintenance. The risk of failure of movement is also reduced, since there is no kinematic chain interposed between the circuit breaker and the partitioning device.

Preferably, said partition shutter comprises a movable partition wall having a first and a second half-walls slidingly movable in opposite directions.

Advantageously, the partitioning device of the invention comprises a first and a second fixed partition walls substantially mutually perpendicular and, for each phase, a partition shutter comprising first and a second movable partition walls substantially mutually perpendicular.

According to a first embodiment, the partitioning device of the invention comprises a single actuating device operatively connected to a plurality of partition shutter.

In said case, the partitioning device according to the invention can comprise, for each phase, a partition shutter and in that said actuating device is operatively connected to each partition shutter of each phase.

Alternatively, the partitioning device of the invention can comprise, for each phase, a partition shutter and an actuating device operatively connected the partition shutter of the corresponding phase.

The actuating device of the partitioning device according to the invention can comprise a plate having a sliding surface capable to interface to said circuit breaker, the opening operation of said partition shutter being actuated by a sliding movement of a part of said circuit breaker on said sliding surface during an insertion operation.

In an alternative embodiment, the actuating device of the partitioning device according to the invention can comprise at least a lever capable to interface to said circuit breaker, the opening operation of said partition shutter being actuated by interaction of a part of said circuit breaker with said lever during an insertion operation.

Advantageously, said actuating device is capable to interface to at least a bushing provided on said circuit breaker.

Preferably said actuating device comprises return means for actuating the closing operation of said partition shutter.

In the partitioning device according to the invention, said actuating device can comprise at least a second lever capable to interface to said circuit breaker, the closing operation of said partition shutter being actuated by interaction of a part of said circuit breaker with said second lever during an extraction operation of said circuit breaker.

By suitably shaping the partition shutter, it is also possible to have the shutter closed when the circuit breaker is the inserted position.

In a further aspect, the present invention relates also to a Medium Voltage cubicle comprising a partitioning device of the kind disclosed herein.

Preferably, the Medium Voltage cubicle according to the invention comprises at least a first, bus-bar, compartment for housing a bus-bars system, and at least a second, circuit breaker, compartment for housing a Medium Voltage circuit breaker, said partitioning device separating at least a portion of said first, bus-bar, compartment from at least a portion of said second, circuit breaker, compartment.

Advantageously, in the Medium Voltage cubicle of the invention, the circuit breaker is movable between at least a first position, in which it is not connected to said bus-bars system, and a second, connected, position in which it is connected to said bus-bar system, said actuating device being actuated by the movement of said circuit breaker from said first position to said second position.

Preferably, said circuit breaker comprises, for each phase, a bushing for connection with a bus-bar of the corresponding phase, said actuating device being capable to interface to at least one of said bushings and to be actuated by said bushing

Further characteristics and advantages of the invention will emerge from the description of preferred, but not exclusive embodiments of the a partitioning device and medium voltage cubicle according to the invention, non-limiting examples of which are provided in the attached drawings, wherein:
Figure 1 is a top view of a first embodiment of a partitioning device according to the invention in a first position;
Figure 2 is a top view of a first embodiment of a partitioning device according to the invention in a second position;
Figure 3 is a top view of a first embodiment of a partitioning device according to the invention in a third position;
Figure 4 is a perspective view of the partitioning device of Figure 1;
Figure 5 is a perspective view of the partitioning device of Figure 2;
Figure 6 is a perspective view of the partitioning device of Figure 3;
Figure 7 is a top view of a second embodiment of a partitioning device according to the invention in a first position;
Figure 8 is a top view of a second embodiment of a partitioning device according to the invention in a second position;
Figure 9 is a top view of a second embodiment of a partitioning device according to the invention in a third position;
Figure 10 is a perspective view of the partitioning device of Figure 7;
Figure 11 is a perspective view of the partitioning device of Figure 8;
Figure 12 is a perspective view of the partitioning device of Figure 9;
Figure 13 is a top view of a third embodiment of a partitioning device according to the invention in a first position;
Figure 14 is a top view of a third embodiment of a partitioning device according to the invention in a second position;
Figure 15 is a top view of a third embodiment of a partitioning device according to the invention in a third position;
Figure 16 is a perspective view of the partitioning device of Figure 13;
Figure 17 is a perspective view of the partitioning device of Figure 14;
Figure 18 is a perspective view of the partitioning device of Figure 15.

With reference to the attached figures, a partitioning device 1 for Medium Voltage cubicles according to the invention, in its more general definition, comprises at least a fixed partition wall 2 and at least a movable partition shutter 10 which is capable to be moved between a first, closed, position and a second, open, position.

The said partition device 1 further comprises an actuating device 4, 5, 6, which is operatively connected to said partition shutter 10; the actuating device 4, 5, 6, is also capable to be operatively interfaced to a Medium Voltage circuit breaker and further capable to be actuated by a movement of said Medium Voltage circuit breaker during an insertion/extraction operation of said circuit breaker.

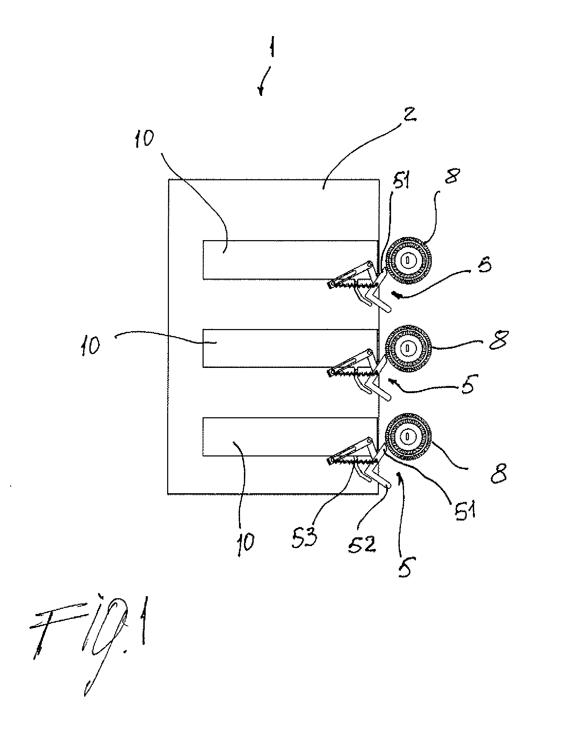

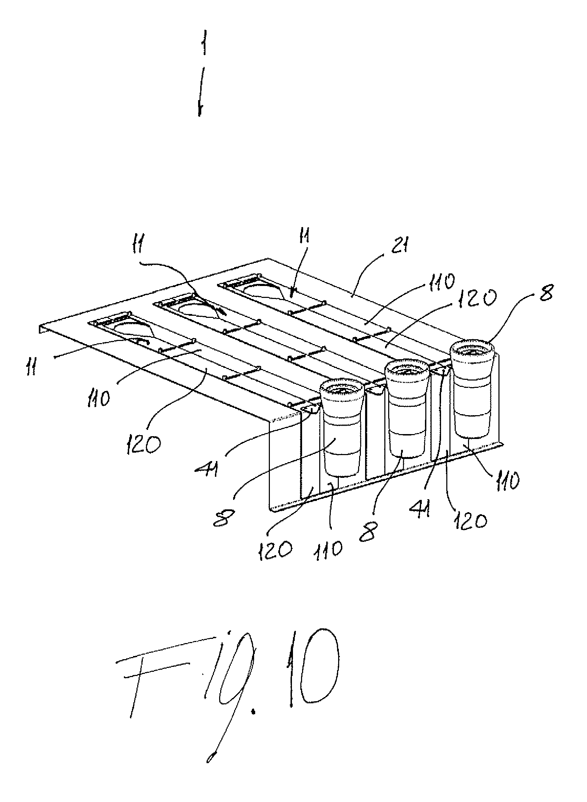

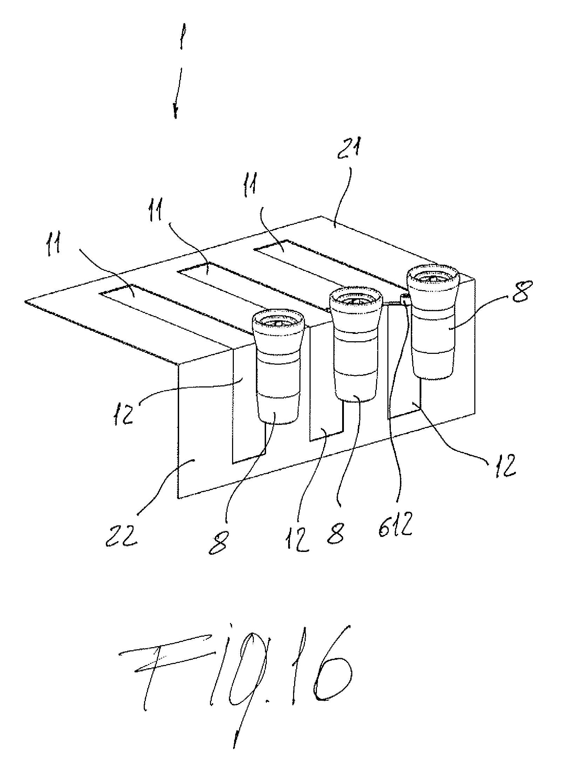

In practice the partition device, when installed in a MV cubicles, determines a segregation between, e.g., the bus-bar compartment and the main compartment housing the circuit breaker. When the circuit breaker is in the disconnected position (Figs. 1, 4, 7, 10, 13, 16), the partition shutter 10 is in the closed position, thereby maintaining segregation between, e.g., the bus-bar compartment and the circuit breaker compartment.

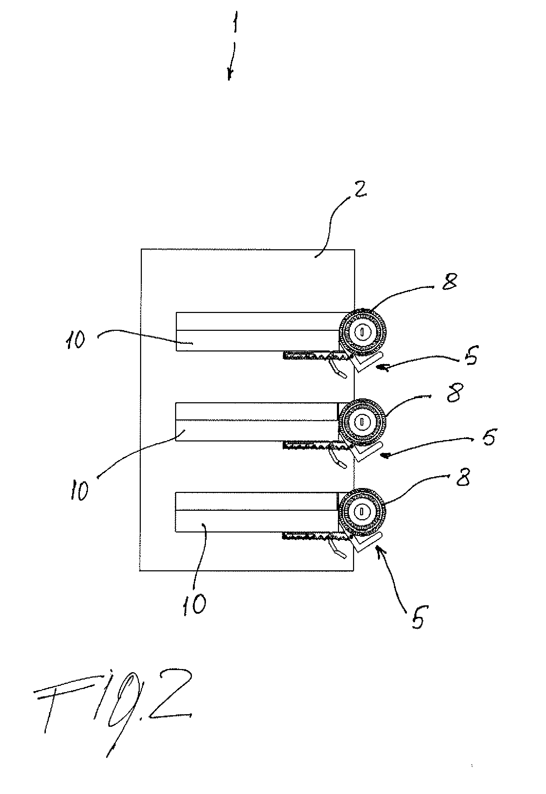

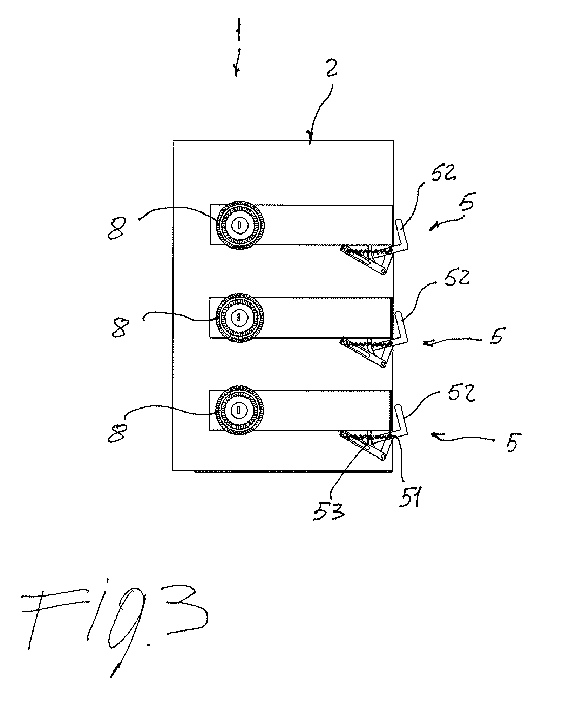

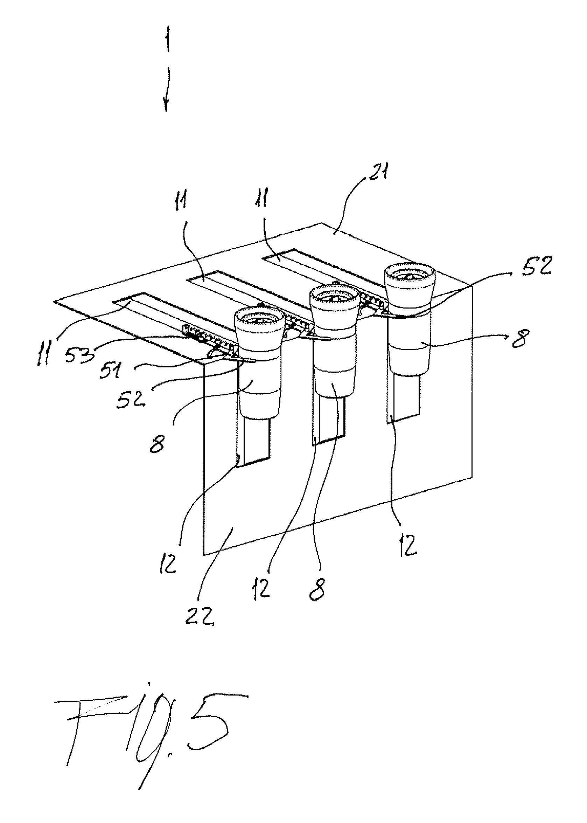

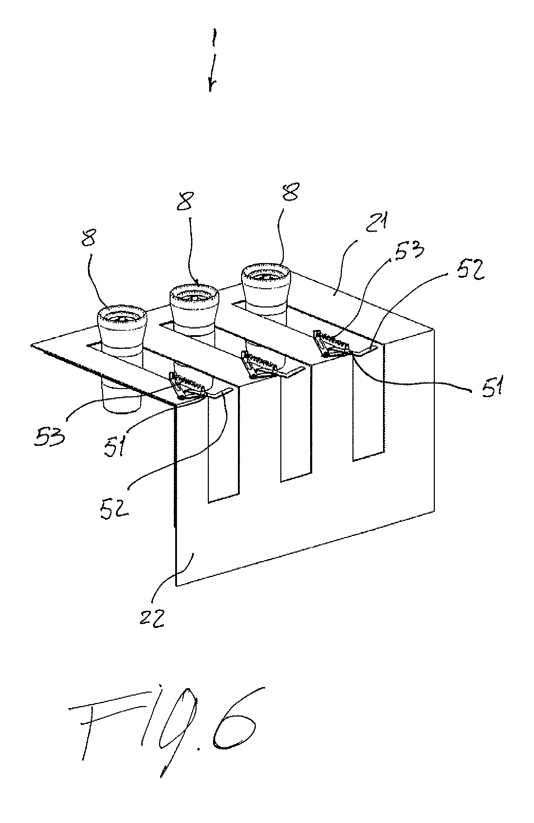

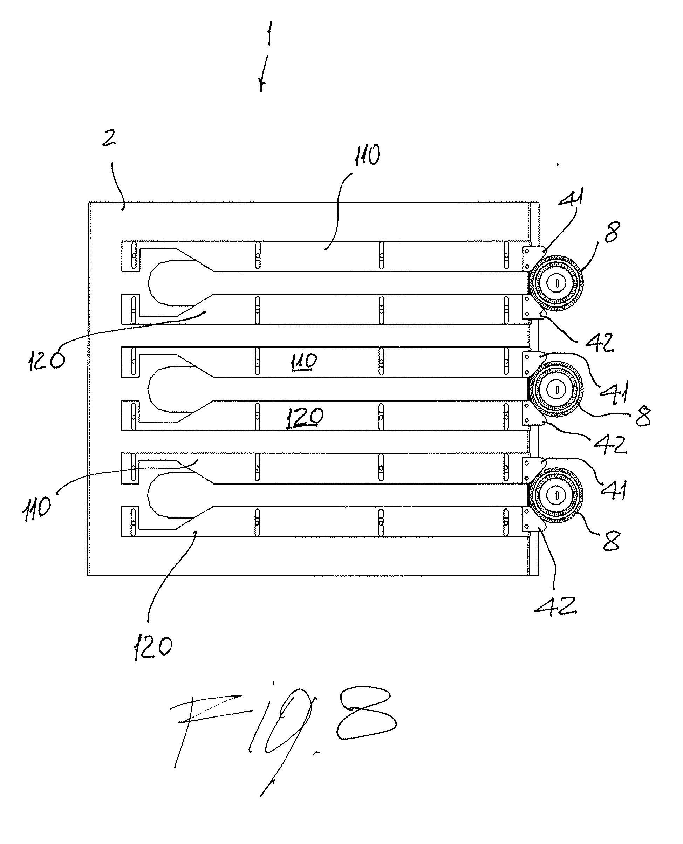

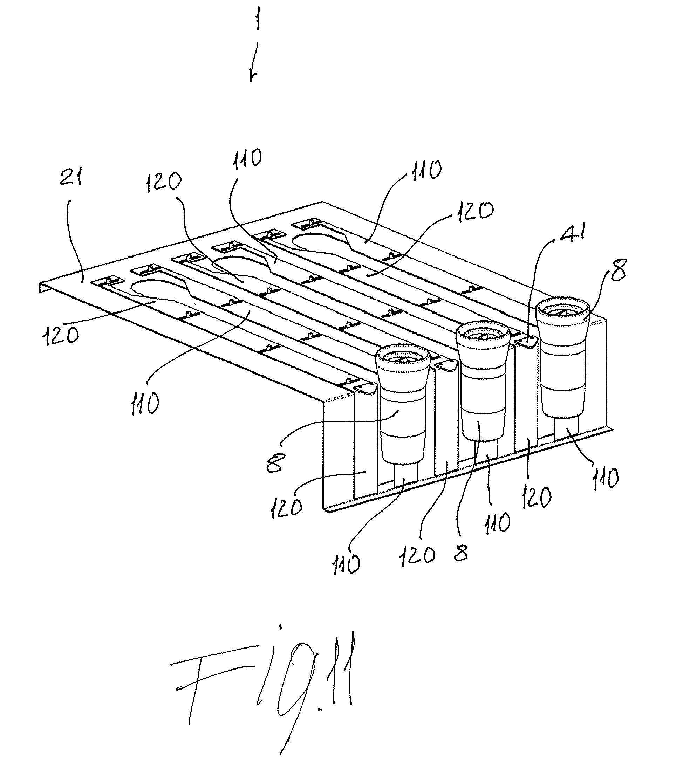

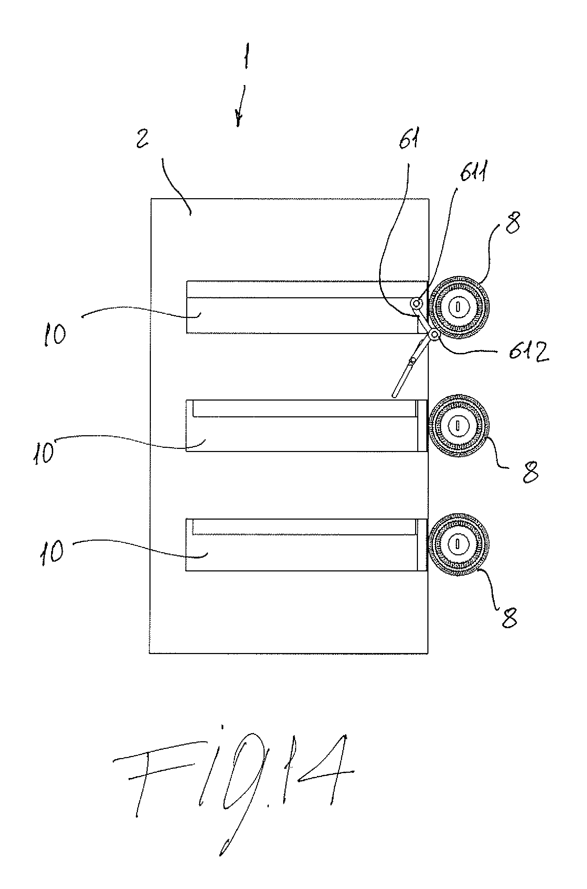

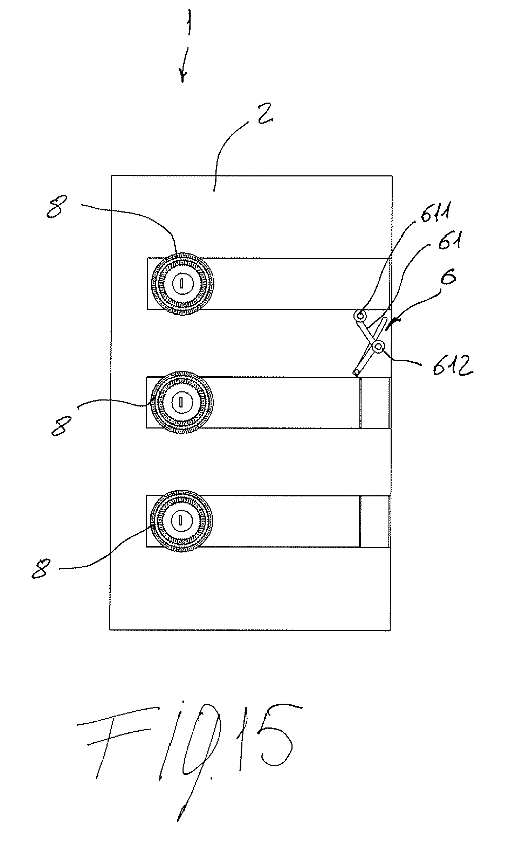

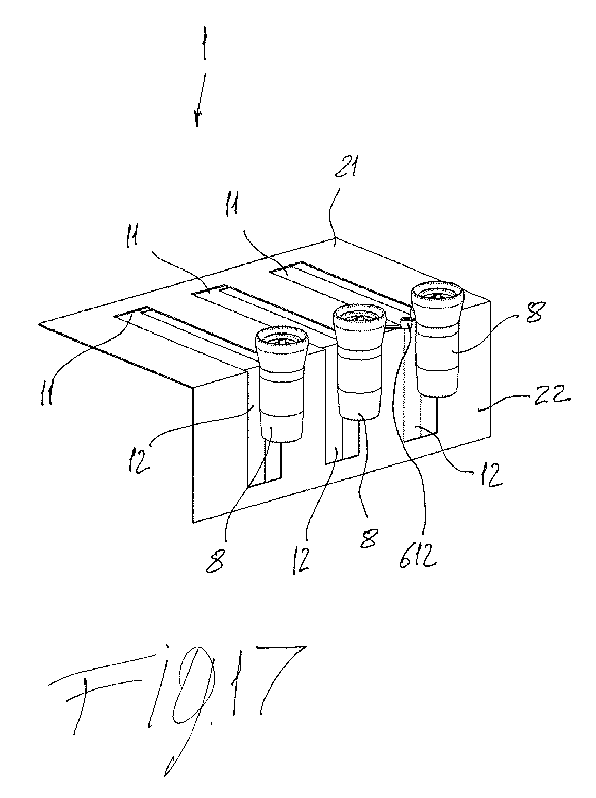

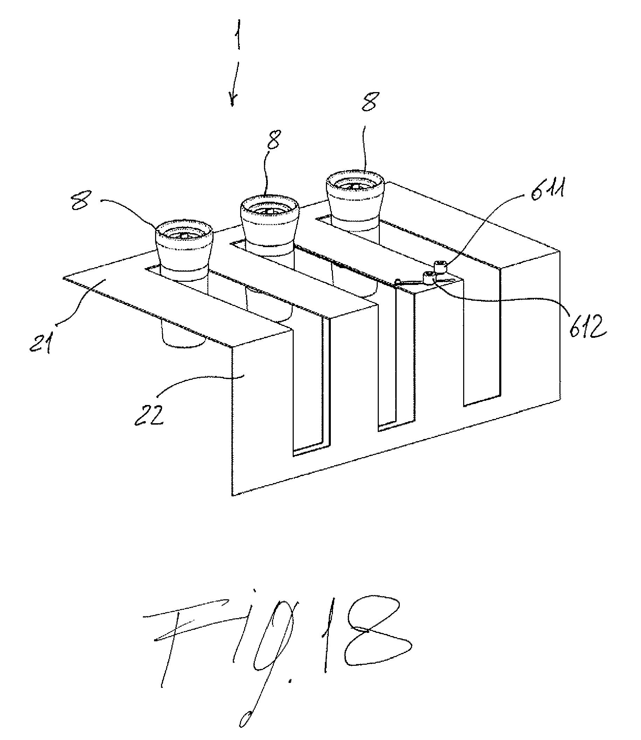

During insertion of the circuit breaker (Figs. 2, 5, 8, 11, 14, 17), the actuating device 4, 5, 6 is operatively interfaced to the circuit breaker and the insertion movement of the circuit breaker determines a progressive opening of the partition shutter 10, thereby allowing the bushing 8 of the circuit breaker (each having a terminal, not shown, for connection to a corresponding bus-bar, also not-shown) to enter into the bus-bar compartment (not shown), as illustrated in Figs. 3, 6, 9, 12, 15, 18.

In other words, the opening of the shutter is not obtained through a kinematic chain permanently linking the partition shutter 10 to the circuit breaker (or a part thereof) as in conventional partitioning systems, but by a direct action of the circuit breaker (or a part thereof, such as, e.g., the bushing 8) on the actuating device 4, 5, 6 of the shutter 10.

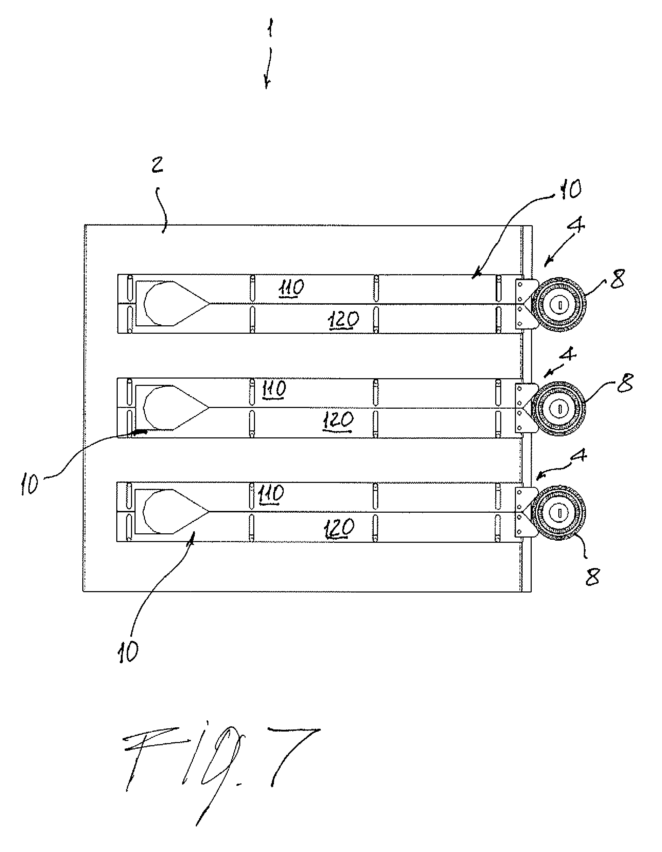

According to a particular embodiment, shown in Figures 7 to 12, the partition shutter 10 can conveniently comprise a movable partition wall having a first 110 and a second 120 half-walls slidingly movable in opposite directions. As illustrated in the above mentioned Figures 7-12, during the insertion movement of the circuit breakers, the first 110 and second 120 half-walls are moved apart from each other in opposite directions, with the bushings 8 of the circuit breaker which enter into the bus-bar compartment.

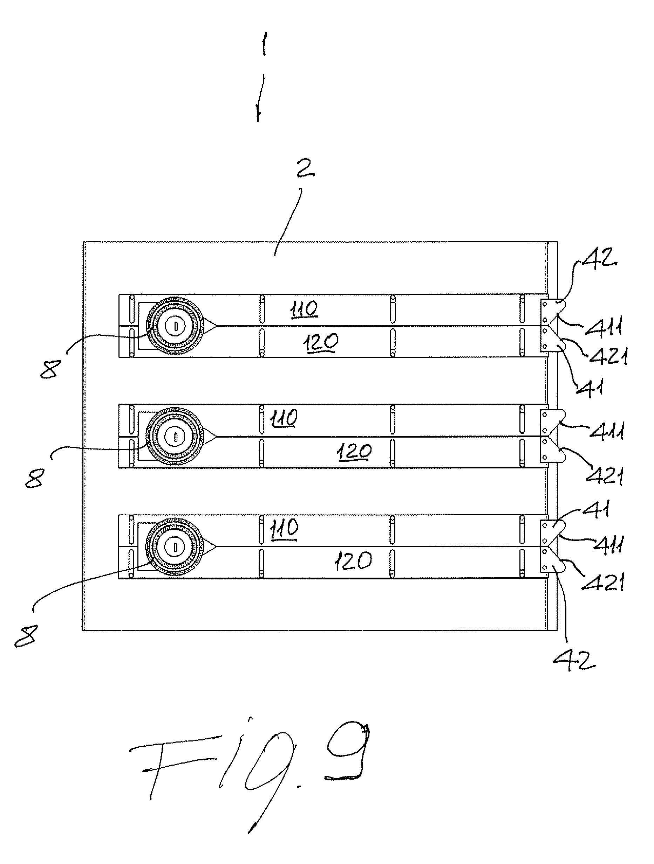

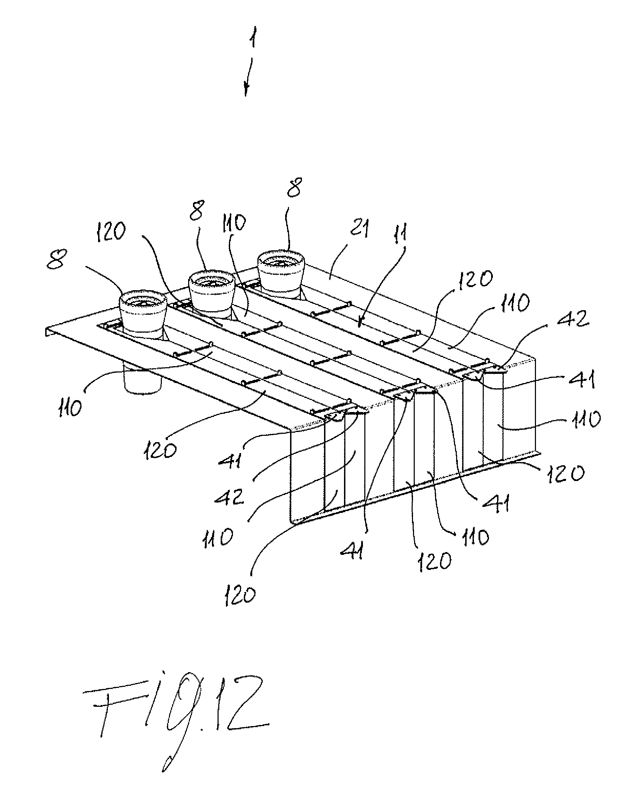

In the embodiment shown in Figures 7-12, the first 110 and second 120 half-walls are conveniently shaped so as to allow closing of the shutters 10 when the circuit breaker is in the inserted position (see Figures 9 and 12). Alternatively, it is possible to have the first 110 and second 120 half-walls shaped so as to maintain the shutters 10 in the open position when the circuit breaker is in the inserted position.

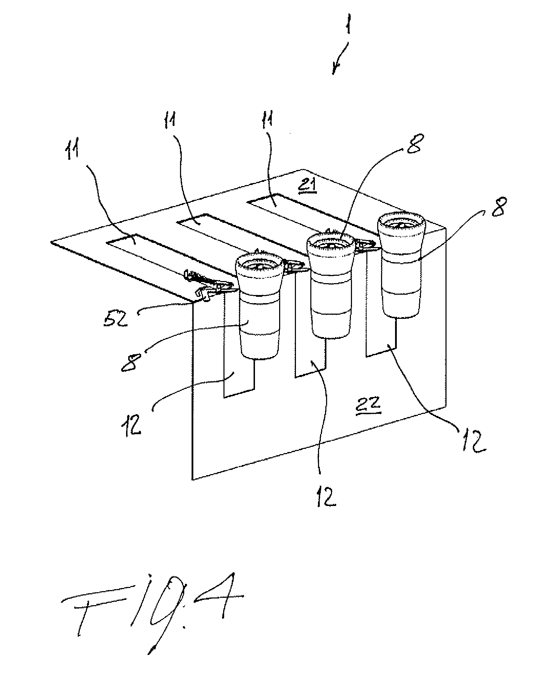

As shown in Figures 4-6, 10-12 and 16-18, the partitioning device 1 according to the invention can comprise a first 21 and a second 22 fixed partition walls substantially mutually perpendicular and, for each phase, a partition shutter 10 comprising first 11 and a second 12 movable partition walls substantially mutually perpendicular.

In practice, according to this embodiment, the fixed partition walls 21, 22 can be constituted by L shaped plates having L shaped openings. L shaped shutters 10, each having two substantially perpendicular arms 11 and 12 are movably positioned in correspondence of said openings, said shutters 10 being actuated by the insertion movement of the circuit breaker so as to open or close said openings, depending on the position of the circuit breaker.

Preferably, as shown in the attached figures, the movement of the partition shutter 10 is a sliding moment transversal to the direction of insertion of the circuit breaker.

According to a possible embodiment of the partitioning device 1 of the invention a single actuating device 4, 5, 6 is foreseen, said single actuating device 4, 5, 6 being operatively connected to a plurality of partition shutters 10.

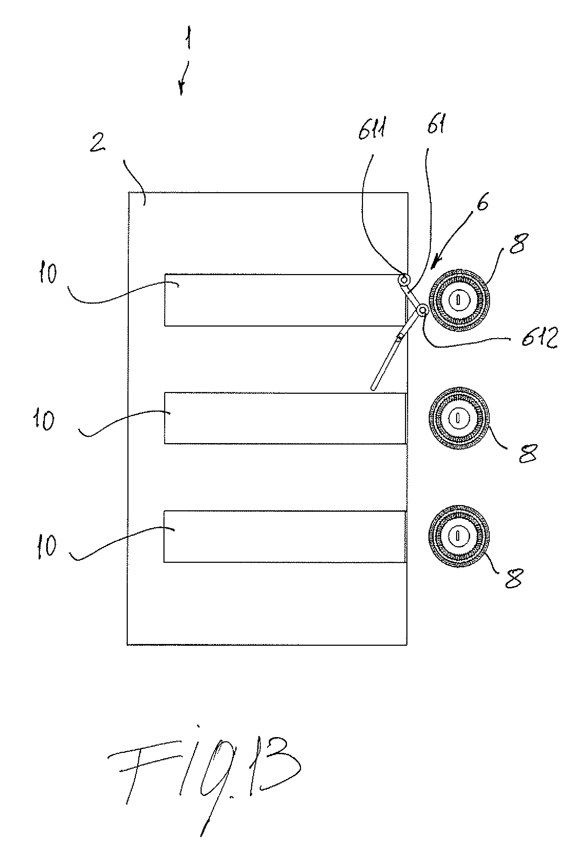

For instance, as shown in figures 13-18, a single actuating device 6 is provided in correspondence of one of the phases of the circuit breaker and interfaces with one of the bushings 8 of the circuit breaker. The actuating device 6 is operatively connected to each partition shutter 10 of each phase, so that the motion imparted by the bushing 8 to the actuating device 6 is transmitted to all shutters 10 determining the opening of all of them. Such solution allows to further simplify the mechanical structure of the partitioning device 1 of the invention, since a single actuating device is required to actuate all shutters.

Alternatively, as shown in figures 1-12, the partitioning device 1 according to the invention can comprise, for each phase, a partition shutter 10 and an actuating device 4, 5 operatively connected the partition shutter 10 of the corresponding phase. In this way a better and more uniform distribution of forces can be achieved.

It has to be understood that the choice of having a single actuating device or a plurality thereof, e.g. one for each phase, does not depend from the specific feature of said actuating device. For instance, instead of having an actuating device 4 and 5 for each phase of the device of Figures 1-6 and 7-12, respectively, a single actuating device 4 or 5 could be used in the respective embodiments. Similarly, in the embodiment of figures 13-18 there could be provided an actuating device 6 for each phase.

The actuating device 4, 5, 6 can be realized in many different ways. A first example is illustrated in figure 7-12, in which the actuating device 4 comprises a plate having a sliding surface capable to interface to said circuit breaker, the opening operation of said partition shutter being actuated by a sliding movement of a part of said circuit breaker on said sliding surface during an insertion operation of said circuit breaker. In the embodiment of Figures 7-12, the partition shutter 10 comprises two half walls 110 and 120. The actuating device 4 therefore can conveniently comprise two plates 41, 42, each having a sliding surface 411, 421 which is capable to interface to said circuit breaker. As shown in the above-mentioned figures, the sliding movement of the bushings 8 on the sliding surfaces 411, 412 during the insertion operation of said circuit breaker actuates the opening operation of the partition shutter 10 by moving the two half-walls 110 and 120 in opposite directions.

Further examples of actuating devices are given in figures 1-6 and 13-18. In said cases, the actuating device 5, 6 comprises at least a first lever 51, 61 capable to interface to said circuit breaker, the opening operation of said partition shutter 10 being actuated by interaction of a part of said circuit breaker with said first lever 51, 61 during an insertion operation of said circuit breaker.

In particular, with reference to Figure 1-6, the lever 51 is hinged on the fixed partition wall 21 and is operatively connected to the shutter 10. During insertion movement of the circuit breaker the bushing 8 pushes on the lever 51 determining the opening of the shutter. Preferably, elastic means, such as a spring 53, are also present in order to allow obtaining a snap opening action of the shutter 10.

Alternatively, with reference to Figure 13-18, the lever 61 is fixed on the shutter 10 and comprises a first and a second roller 611 and 612. During insertion operation of the circuit breaker, the bushing slides on said rollers 611 and 612, determining movement of the lever 61, and of the shutter 10 associated thereto in a transverse direction with respect to the insertion direction of the circuit breaker.

Preferably, the actuating device 4, 5, 6 can conveniently comprise return means for actuating the closing operation of said partition shutter 10. For instance, said return means can be constituted by elastic means, e.g. springs, which tend to maintain the shutter 10 in the closed position. When the shutter 10 is in the open position and the circuit breaker is inserted the elastic means are in a loaded so as to be able to restore the closed position of the shutter 10 when the circuit breaker is in the disconnected position.

Advantageously, as shown in Figures 1-6, the actuating device 5 can comprise at least a second lever 52 which is capable to interface to said circuit breaker; when the circuit breaker is extracted the closing operation of the partition shutter 10 is actuated by interaction of a part of said circuit breaker, e.g. the bushing 8, with said second lever 52 during an extraction operation of said circuit breaker. In other words, during extraction, the bushing 8 pushes on the lever 52 determining the closing of the shutter 10 according to a sequence of movements opposite to the one shown in Figures 1-6.

As already said, the present invention also relates to a Medium Voltage cubicle comprising a partitioning device 1 of the kind described herein.

Preferably, the Medium Voltage cubicle according to the invention comprises at least a first, bus-bar, compartment for housing a bus-bars system, and at least a second, circuit breaker, compartment for housing a Medium Voltage circuit breaker. Inside said cubicle, the partitioning device 1 is positioned so as to separate at least a portion of said first, bus-bar, compartment from at least a portion of said second, circuit breaker, compartment.

In the Medium Voltage cubicle according to the invention, the circuit breaker is movable between at least a first position, in which it is not connected to said bus-bars system, and a second, connected, position in which it is connected to said bus-bar system, the actuating device 4, 5, 6 of said partitioning device 1 being actuated by the movement of said circuit breaker from said first position to said second position.

Preferably, the circuit breaker comprises, for each phase, a bushing 8 for connection with a bus-bar of the corresponding phase, said actuating device 4, 5, 6 being capable to interface to at least one of said bushings and to be actuated by said bushing.

It is clear from the above that the partitioning device and the Medium Voltage cubicle of the invention have a number of advantages with respect to similar partitioning device and cubicles of known type.

In particular, the partitioning device of the invention does not require the use of a kinematic chain linked to the circuit breaker or a part thereof, the movement being obtained directly from the components of the circuit breaker, e.g. the bushings, during the insertion and extraction operation. This allows to reduce the number of components, thereby reducing the manufacturing, installation and maintenance costs.

In this way it is possible to obtain a cubicle fully satisfying the partitioning requirements of existing regulations with minimal efforts and reasonably low costs.

Also, as shown in figures 7-12, it is possible to have the shutter closed when the circuit breaker is in the inserted position. It has to be understood that a similar solution is not limited to the specific embodiment of said figures but it is of general applicability. For instance, by suitably shaping the end portion of the shutter 10 it is possible the have the same results also in the embodiments of Figures 1-6 and 13-18.

In general, the structure of the partitioning device of the invention, with short translational stroke of the shutter, is greatly simplified with respect to the known partitioning devices.

The partitioning device and the panel thus conceived may undergo numerous modifications and come in several variants, all coming within the scope of the inventive concept. Moreover, all the component parts described herein may be substituted by other, technically equivalent elements. In practice, the component materials and dimensions of the device may be of any nature, according to need and the state of the art.

## Claims

1. A partitioning device (1) for Medium Voltage cubicles **characterized in that** it comprises at least a fixed partition wall (2) and at least a movable partition shutter (10), said partition shutter (10) being capable to be moved between a first, closed, position and a second, open, position, said partition device (1) further comprising an actuating device (4, 5, 6) operatively connected to said partition shutter (10) and capable to be operatively interfaced to a Medium Voltage circuit breaker and further capable to be actuated by a movement of said Medium Voltage circuit breaker during an insertion/extraction operation of said circuit breaker.

2. The partitioning device (1) according to claim 1, **characterized in that** said partition shutter (10) comprises a movable partition wall having a first (110) and a second (120) half-walls slidingly movable in opposite directions.

3. The partitioning device (1) according to claim 1 or 2, **characterized in that** it comprises a first (21) and a second (22) fixed partition walls substantially mutually perpendicular and, for each phase, a partition shutter (10) comprising first (11) and a second (12) movable partition walls substantially mutually perpendicular.

4. The partitioning device (1) according to one or more of the previous claims, **characterized in that** it comprises a single actuating device (4, 5, 6) operatively connected to a plurality of partition shutters (10).

5. The partitioning device (1) according to claim 4, **characterized in that** it comprises, for each phase, a partition shutter (10) and **in that** said actuating device (4, 5, 6) is operatively connected to each partition shutter (10) of each phase.

6. The partitioning device (1) according to one or more of claims 1 to 3, **characterized in that** it comprises, for each phase, a partition shutter (10) and an actuating device (4, 5, 6) operatively connected the partition shutter (10) of the corresponding phase.

7. The partitioning device (1) according to one or more of the previous claims, **characterized in that** said actuating device (4) comprises a plate (41, 42) having a sliding surface (411, 421) capable to interface to said circuit breaker, the opening operation of said partition shutter (10) being actuated by a sliding movement of a part of said circuit breaker on said sliding surface (411, 412) during an insertion operation of said circuit breaker.

8. The partitioning device (1) according to one or more of claims 1 to 6, **characterized in that** said actuating device (5, 6) comprises at least a first lever (51, 61) capable to interface to said circuit breaker, the opening operation of said partition shutter (10) being actuated by interaction of a part of said circuit breaker with said first lever (51, 61) during an insertion operation of said circuit breaker.

9. The partitioning device (1) according to one or more of the previous claims, **characterized in that** said actuating device (4, 5, 6) is capable to interface to at least a bushing (8) provided on said circuit breaker.

10. The partitioning device (1) according to one or more of the previous claims, **characterized in that** said actuating device (4, 5, 6) comprises return means for actuating the closing operation of said partition shutter (10).

11. The partitioning device (1) according to one or more of the previous claims, **characterized in that** said actuating device (5) comprises at least a second lever (52) capable to interface to said circuit breaker, the closing operation of said partition shutter (10) being actuated by interaction of a part of said circuit breaker with said second lever (52) during an extraction operation of said circuit breaker.

12. A Medium Voltage cubicle **characterized in that** it comprises a partitioning device (1) according to one or more of the previous claims.

13. The Medium Voltage cubicle according to claim 12, **characterized in that** it comprises at least a first, bus-bar, compartment for housing a bus-bars system, and at least a second, circuit breaker, compartment for housing a Medium Voltage circuit breaker, said partitioning device (1) separating at least a portion of said first, bus-bar, compartment from at least a portion of said second, circuit breaker, compartment.

14. The Medium Voltage cubicle according to claim 13, **characterized in that** circuit breaker is movable between at least a first position, in which it is not connected to said bus-bars system, and a second, connected, position in which it is connected to said bus-bar system, said actuating device (4, 5, 6) being actuated by the movement of said circuit breaker from said first position to said second position.

15. The Medium Voltage cubicle according to claim 13 or 14, **characterized in that** said circuit breaker comprises, for each phase, a bushing (8) for connection with a bus-bar of the corresponding phase, said actuating device (4, 5, 6) being capable to interface to at least one of said bushings and to be actuated by said bushing.
